(19) Europäisches Patentamt
European Patent Office
Office européen des brevets

(11) EP 4 177 671 B1

(12) **EUROPEAN PATENT SPECIFICATION**

(45) Date of publication and mention of the grant of the patent:
**31.12.2025 Bulletin 2026/01**

(21) Application number: **21832312.9**

(22) Date of filing: **01.07.2021**

(51) International Patent Classification (IPC):
***G02F 1/137*** $^{(2006.01)}$ ***G02F 1/1339*** $^{(2006.01)}$
***G02F 1/1337*** $^{(2006.01)}$ ***E06B 9/24*** $^{(2006.01)}$

(52) Cooperative Patent Classification (CPC):
**E06B 9/24; G02C 7/101; G02F 1/13394; G02F 1/13718;** E06B 2009/2464; G02C 2202/16; G02F 1/1337; G02F 1/13725; G02F 2202/28; G02F 2203/48

(86) International application number:
**PCT/KR2021/008385**

(87) International publication number:
**WO 2022/005236 (06.01.2022 Gazette 2022/01)**

(54) **OPTICAL MODULATION DEVICE**
OPTISCHE MODULATIONSVORRICHTUNG
DISPOSITIF DE MODULATION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2020 KR 20200082159**

(43) Date of publication of application:
**10.05.2023 Bulletin 2023/19**

(73) Proprietor: **LG Chem, Ltd.**
**Seoul 07336 (KR)**

(72) Inventors:
- **KIM, Jin Hong**
  **Daejeon 34122 (KR)**
- **OH, Dong Hyun**
  **Daejeon 34122 (KR)**
- **YOU, Jung Sun**
  **Daejeon 34122 (KR)**
- **KIM, Jung Woon**
  **Daejeon 34122 (KR)**
- **GIM, Min Jun**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 998 786**
**KR-B1- 101 691 616**
**KR-B1- 101 999 963**
**KR-B1- 102 028 446**
**KR-B1- 102 100 459**
**US-A1- 2012 257 123**
**US-A1- 2016 026 026**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 177 671 B1

## Description

[Technical Field]

The present application relates to a light modulating device and a window.

[Background Art]

A light modulating device is a device capable of switching between at least two or more different states. Such a device is used for, for example, a wearable device such as eyewear such as glasses or sunglasses, a mobile device, a device for virtual reality (VR) or a device for augmented reality (AR), or a window (so-called smart window) applied to a vehicle sunroof or glass of a building, and the like, the uses of which are gradually expanded.

Among the light modulating devices, a device using a guest-host liquid crystal system changes light absorptivity of a liquid crystal layer by mixing a dichroic dye with respect to host molecules in the liquid crystal layer as guest molecules and changing the arrangement of the host molecules and guest molecules by a voltage applied to liquid crystals.

In such a guest-host liquid crystal system, the method of widening the transmittance variable range (for example, the ratio of transmittance in a transparent state to transmittance in a blocking state) includes a method of increasing the amount of the dichroic dye added as the guest molecules. However, the known dichroic dye does not have high solubility in the liquid crystal compound as the host molecules, so that there is a limit to widening the transmittance variable range by increasing the amount of the dichroic dye.

Meanwhile, the method of widening the transmittance variable range by a method of adding a chiral dopant to the guest-host liquid crystal system may be considered. However, even in this method, a large amount of chiral dopant must be added in order to widen the transmittance variable range, but liquid crystal defects may occur due to the chiral dopant thus added, and a problem in visibility may occur.

US 2016/026026 A1 and EP 2 998 786 A1 disclose a light modulating device comprising a first substrate on its first surface of which a pressure-sensitive adhesive layer or an adhesive layer is formed; a second substrate having a first surface, wherein the first surface is disposed to face the first surface of the first substrate; and a liquid crystal layer between the first and second substrate, wherein a distance between the first and second substrates is maintained by a partition wall spacer, wherein the liquid crystal layer is configured to implement a twist orientation. KR 101 999 963 B1 is also a background art document useful for understanding the invention.

[Disclosure]

[Technical Problem]

It is an object of the present application to provide a light modulating device. It is an object of the present application to provide a light modulating device without liquid crystal defects or visibility deterioration, while exhibiting a wide transmittance variable range, and its use.

[Technical Solution]

Among the physical properties mentioned in this specification, the physical property in which the measured temperature affects the results is results measured at room temperature, unless otherwise specified.

In this specification, the term room temperature is a temperature in a state without particularly warming or cooling, which may mean any one temperature within the range of about 10°C to 30°C, for example, about 15°C or more, 18°C or more, 20°C or more or about 23°C or more and simultaneously about 27°C or less. In addition, unless otherwise specified, the unit of temperature mentioned in this specification is Celsius (°C).

Among the physical properties mentioned in this specification, the physical property in which the measured pressure affects the results is results measured at normal pressure, unless otherwise specified.

The term normal pressure is a natural pressure without pressurizing or depressurizing, which usually means about 1 atmosphere or so in a level of atmospheric pressure.

In the case of a physical property in which the measured humidity affects the results, the relevant physical property is a physical property measured at natural humidity without particularly controlling in a room temperature and/or normal pressure state.

In this specification, the term such as vertical, horizontal, orthogonal or parallel among terms defining an angle means substantially vertical, horizontal, orthogonal or parallel in the range without impairing intended effects, and the range of vertical, horizontal, orthogonal or parallel includes an error such as a production error or a deviation (variation). For example, each case of the foregoing may include an error within about ±15 degrees, an error within about ±10

degrees, or an error within about ±5 degrees.

The present application relates to a light modulating device. The term light modulating device may mean a device capable of switching between two or more different light states. Here, the different light states may mean states in which at least transmittance, reflectance, color and/or haze are different.

The present application provides a light modulating device according to claim 1. Further embodiments are disclosed in the dependent claims.

In the present application, the term first surface of the first or second substrate means any one major surface of the first or second substrate, and the second surface means the surface opposite the first surface in the first or second substrate.

As described below, a pressure-sensitive adhesive layer or an adhesive layer is formed on the first surface of the first substrate.

Also, a distance between the first and second substrates is maintained by a so-called partition wall spacer.

Figure 1 exemplarily shows a light modulating device according to one aspect of the present application. The light modulating device according to a first example comprises a first substrate (101), a liquid crystal layer (300) and a second substrate (201) sequentially. The first substrate (101) has a pressure-sensitive adhesive layer or adhesive layer (103) formed on a first surface thereof. As described below, the liquid crystal layer (300) may comprise a liquid crystal compound and a chiral dopant. As shown in Figure 1, a liquid crystal alignment film (203) may be present on the first surface of the second substrate (201). In another aspect, the liquid crystal alignment film (203) may not exist. In Figure 1, the first and second substrates are disposed oppositely so that their first surfaces face each other, and a distance (G) between the first and second substrates is maintained by a partition wall spacer (400).

Figure 2 exemplarily shows a light modulating device according to another aspect of the present application. The light modulating device of Figure 2 has a structure similar to that of the device of Figure 1, but the liquid crystal alignment film is not formed on the second substrate (201). Even in the structure of Figure 2, the distance between the first and second substrates is maintained by the partition wall spacer (400).

The light modulating device of the present application is configured to implement at least twist orientation. Such a twist orientation state may be implemented in a state where no voltage is applied or in a state where a voltage is applied.

The liquid crystal layer may be configured to be capable of switching between the twist orientation and the other orientation. For example, if the twist orientation is implemented in a state where no voltage is applied, it can be switched to the other orientation by applying a voltage, and if the twist orientation is implemented in a state where a voltage is applied, it can be switched to the other orientation in the state where no voltage is applied by removing the voltage.

The liquid crystal layer is configured so that the ratio (d/p) of the thickness (cell gap, d) of the liquid crystal layer to the pitch (p) of the liquid crystal layer in the twist orientation state is more than 2.8 and 7 or less. Such a d/p ratio may be adjusted through adjustment of the ratio of the chiral dopant present in the liquid crystal layer and the thickness of the liquid crystal layer. It is possible to provide a light modulating device with a wide transmittance variable range and without visibility deterioration and liquid crystal defects by maintaining the distance between the liquid crystal layers exhibiting such d/p by a partition wall spacer.

In another example, the d/p may be 2.9 or more, 3 or more, 3.1 or more, 3.2 or more, 3.3 or more, 3.4 or more, 3.5 or more, 3.6 or more, 3.7 or more, 3.8 or more, 3.9 or more, 4 or more, 4.1 or more, 4.2 or more, 4.3 or more, 4.4 or more, 4.5 or more, 4.6 or more, 4.7 or more, or 4.8 or more, or may also be 6 or less, 5 or less, 5.7 or less, 5.5 or less, 5.4 or less, 5.3 or less, 5.2 or less, 5.1 or less, 5.0 or less, 4.9 or less, 4.7 or less, 4.5 or less, or 4 or less or so.

The light modulating device of the present application may be designed to be capable of switching between a transparent mode and a black mode. The switching of the light modulating device may be adjusted according to application of an external signal, for example, whether or not a voltage signal is applied. In one example, the black mode may be implemented in the above-described twist orientation, and the transparent mode may be implemented in orientation different from the twist orientation.

The light modulating device of the present application may comprise, as a basic unit, a structure having two substrates disposed to face each other and a liquid crystal layer positioned between the substrates. The basic unit may also be called a liquid crystal cell. In general, a liquid crystal alignment film is formed on both the surfaces, which face the liquid crystal layer, of both the first and second substrates, but a pressure-sensitive adhesive layer or an adhesive layer is formed on the first substrate, whereby the orientation state of the liquid crystal compound which is very useful in a specific application (e.g., smart window or eyewear) can be obtained. Therefore, the liquid crystal alignment film may not be formed on the first substrate of the light modulating device of the present application. In addition, a spacer for maintaining a distance (cell gap) between the first and second substrates is present on any one of the first and second substrates of the light modulating device, but when a pressure-sensitive adhesive layer or an adhesive layer is formed on the first substrate, the pressure-sensitive adhesive layer or the adhesive layer may be attached to the spacer to greatly improve the bonding

force of the first and second substrates.

In this specification, the first surface of the substrate means any one of the main surface of the substrate and the opposite surface thereof, and the second surface means the other surface of the main surface of the substrate and the opposite surface thereof. Also, here, the main surface may mean a surface having the largest area among the surfaces of the substrate.

As the first substrate and the second substrate, a known substrate material may be used without any particular limitation. For example, an inorganic substrate such as a glass substrate, a crystalline or amorphous silicon substrate or a quartz substrate, or a plastic substrate may be used as the substrate. As the plastic substrate, a TAC (triacetyl cellulose) substrate; a COP (cycloolefin copolymer) substrate such as a norbornene derivative substrate; a PMMA (poly(methyl methacrylate)) substrate; a PC (polycarbonate) substrate; a PE (polyethylene) substrate; a PP (polypropylene) substrate; a PVA (polyvinyl alcohol) substrate; a DAC (diacetyl cellulose) substrate; a Pac (polyacrylate) substrate; a PES (poly ether sulfone) substrate; a PEEK (polyetheretherketon) substrate; a PPS (polyphenylsulfone), a PEI (polyetherimide) substrate; a PEN (polyethylenenaphthalate) substrate; a polyester substrate such as a PET (polyethyleneterephthalate) substrate; a PI (polyimide) substrate; a PSF (polysulfone) substrate ; a PAR (polyarylate) substrate or a substrate comprising an amorphous fluororesin or the like may be used, without being limited thereto. The thickness of such a substrate is not particularly limited, which may be selected within an appropriate range.

In the light modulating device of the present application, a pressure-sensitive adhesive layer or an adhesive layer may be formed on the first surface of the first substrate. In one example, the ratio (percentage) (=100%×A/B) of the area (A) of the pressure-sensitive adhesive layer or adhesive layer formed on the first surface to the area (B) of the first surface may be 50% or more, 55 % or more, 60% or more, 65% or more, 70% or more, 75% or more, 80% or more, 85% or more, 90% or more, or 95% or more or so. The upper limit of the ratio (percentage) (=100%×A/B) is not particularly limited, which may be, for example, about 100% or so.

The pressure-sensitive adhesive layer or the adhesive layer may be optically transparent. The pressure-sensitive adhesive layer or the adhesive layer may have average transmittance of about 80% or more, 85% or more, 90% or more, or 95% or more for a visible light region, for example, a wavelength of 380nm to 780nm.

As a pressure-sensitive adhesive, a silicone-based pressure-sensitive adhesive may be used. The pressure-sensitive adhesive layer or adhesive layer may be combined with the liquid crystal alignment film to induce proper orientation of the liquid crystal compound.

In one example, the pressure-sensitive adhesive layer or adhesive layer may be a liquid crystal orientation pressure-sensitive adhesive layer or adhesive layer having liquid crystal orientation force and attachment force to liquid crystal molecules simultaneously. For example, the pressure-sensitive adhesive or adhesive may be a vertically orientational pressure-sensitive adhesive or adhesive. In this specification, the vertically orientational pressure-sensitive adhesive or adhesive may mean a pressure-sensitive adhesive or adhesive having attachment force capable of bonding an upper substrate and a lower substrate while imparting a vertical orientation force to an adjacent liquid crystal compound.

The pretilt angle of the adjacent liquid crystal compound with respect to the vertically orientational pressure-sensitive adhesive or adhesive may be in the range of 80 degrees to 90 degrees, 85 degrees to 90 degrees or 87 degrees to 90 degrees, and the pretilt angle of the adjacent liquid crystal compound with respect to the horizontally orientational pressure-sensitive adhesive or adhesive may be in the range of 0 degrees to 10 degrees, 0 degrees to 5 degrees, or 0 degrees to 3 degrees. According to one example of the present application, a vertically orientational pressure-sensitive adhesive or adhesive may be used as the pressure-sensitive adhesive or adhesive.

In this specification, the pretilt angle may mean an angle formed by the director of the liquid crystal compound with respect to a plane horizontal to the liquid crystal orientational pressure-sensitive adhesive or alignment film in a state where no voltage is applied. In this specification, the director of the liquid crystal compound may mean an optical axis or a slow axis of the liquid crystal layer. Alternatively, the director of the liquid crystal compound may mean a long axis direction when the liquid crystal compound has a rod shape, and may mean an axis parallel to the normal direction of the plane of the disk when the liquid crystal compound has a discotic shape. When a plurality of liquid crystal compounds having different directors exist in the liquid crystal layer, the director may be a vector sum.

In one example of the present application, as the pressure-sensitive adhesive or adhesive having strong stain resistance to liquid crystals and having vertical orientation force, for example, a silicone-based pressure-sensitive adhesive or adhesive may be used. As the silicone-based pressure-sensitive adhesive or adhesive, a cured product of a composition comprising a curable silicone compound may be used. Since the curable silicone compound may exhibit vertical orientation ability due to its surface characteristics, an appropriate type may be selected from known silicone pressure-sensitive adhesives or adhesives. The type of the composition (hereinafter, curable silicone composition) comprising the curable silicone compound is not particularly limited, where for example, a heat-curable silicone composition or an ultraviolet-curable silicone composition may be used.

In one example, the curable silicone composition is an addition-curable silicone composition, which may comprise (1) an organopolysiloxane containing two or more alkenyl groups in the molecule, and (2) an organopolysiloxane containing two or more silicon-bonded hydrogen atoms in the molecule. Such a silicone compound may form a cured

product by an addition reaction, for example, in the presence of a catalyst such as a platinum catalyst.

A more specific example of the (1) organopolysiloxane, which may be used in the present application, may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by $R^1_2SiO_{2/2}$ and a siloxane unit represented by $R^1_2R^2SiO_{1/2}$ and a siloxane unit represented by $SiO_{4/2}$, an organopolysiloxane copolymer comprising a siloxane unit represented by $R^1_2R^2SiO_{1/2}$ and a siloxane unit represented by $SiO_{4/2}$, an organopolysiloxane copolymer comprising a siloxane unit represented by $R^1R^2SiO_{2/2}$ and a siloxane unit represented by $R^1SiO_{3/2}$ or a siloxane unit represented by $R^2SiO_{3/2}$, and a mixture of two or more of the foregoing, but is not limited thereto.

Here, $R^1$ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group, or a 3,3,3-trifluoropropyl group, and the like.

In addition, here, $R^2$ is an alkenyl group, which may be, specifically, a vinyl group, an allyl group, a butenyl group, a pentenyl group, a hexenyl group or a heptenyl group, and the like.

A more specific example of the (2) organopolysiloxane, which may be used in the present application, may include a methylhydrogenpolysiloxane blocking with trimethylsiloxane groups at both ends of the molecular chain, a dimethylsiloxane-methylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by $R^1_3SiO_{1/2}$, a siloxane unit represented by $R^1_2HSiO_{1/2}$ and a siloxane unit represented by $SiO_{4/2}$, an organopolysiloxane copolymer comprising a siloxane unit represented by $R^1_2HSiO_{1/2}$ and a siloxane unit represented by $SiO_{4/2}$, an organopolysiloxane copolymer comprising a siloxane unit represented by $R^1HSiO_{2/2}$ and a siloxane unit represented by $R^1SiO_{3/2}$ or a siloxane unit represented by $HSiO_{3/2}$ and a mixture of two or more of the foregoing, but is not limited thereto. Here, $R^1$ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenethyl group; a halogen-substituted alkyl group such as a chloromethyl group, a 3-chloropropyl group or a 3,3,3-trifluoropropyl group, and the like.

The content of the (2) organopolysiloxane is not particularly limited as long as it is included to the extent that appropriate curing can be performed. For example, the (2) organopolysiloxane may be contained in an amount of 0.5 to 10 silicon-bonded hydrogen atoms per one alkenyl group contained in the (1) organopolysiloxane as described above. In such a range, curing can be sufficiently performed and heat resistance can be secured.

The addition-curable silicone composition may further comprise platinum or a platinum compound as a catalyst for curing. The specific type of this platinum or platinum compound is not particularly limited. The ratio of the catalyst may also be adjusted to a level that proper curing may be performed.

The addition-curable silicone composition may also comprise an appropriate additive required from the viewpoint of improving storage stability, handling properties and workability in an appropriate ratio.

In another example, the silicone composition may comprise, as a condensation-curable silicone composition, for example, (a) an alkoxy group-containing siloxane polymer; and (b) a hydroxyl group-containing siloxane polymer.

The (a) siloxane polymer may be, for example, a compound represented by Formula 1 below.

[Formula 1] $R^1_aR^2_bSiO_c(OR^3)_d$

In Formula 1, $R^1$ and $R^2$ each independently represent a hydrogen atom or a substituted or unsubstituted monovalent hydrocarbon group, $R^3$ represents an alkyl group, where when a plurality of R1, $R^2$ and $R^3$ are present, they each may be the same or different from each other, and a and b each independently represent a number of 0 or more and less than 1, a+b represents a number of more than 0 and less than 2, c represents a number of more than 0 and less than 2,

d represents a number of more than 0 and less than 4, and a+b+cX2+d is 4.

In the definition of Formula 1, the monovalent hydrocarbon may be, for example, an alkyl group having 1 to 8 carbon atoms, a phenyl group, a benzyl group or a tolyl group, and the like, where the alkyl group having 1 to 8 carbon atoms may be a methyl group, an ethyl group, a propyl group, an isopropyl group, a butyl group, a pentyl group, a hexyl group, a heptyl group or an octyl group, and the like. Also, in the definition of Formula 1, the monovalent hydrocarbon group may be substituted with a known substituent such as a halogen, an amino group, a mercapto group, an isocyanate group, a glycidyl group, a glycidoxy group or a ureido group.

In the definition of Formula 1, an example of the alkyl group of R3 may include a methyl group, an ethyl group, a propyl group, an isopropyl group or a butyl group, and the like. Among these alkyl groups, a methyl group or an ethyl group, and the like is usually applied, but is not limited thereto.

Among the polymers of Formula 1, a branched or tertiary crosslinked siloxane polymer may be used. Furthermore, in this (a) siloxane polymer, a hydroxyl group may remain within a range that does not impair the object, specifically within a range that does not inhibit the dealcoholization reaction.

The (a) siloxane polymer may be produced, for example, by hydrolyzing and condensing a polyfunctional alkoxysilane or a polyfunctional chlorosilane, and the like. An average technician in this field can easily select an appropriate polyfunctional alkoxysilane or chlorosilane depending on the desired (a) siloxane polymer, and can also easily control the conditions of the hydrolysis and condensation reactions using the same. Meanwhile, in the production of the (a) siloxane polymer, an appropriate monofunctional alkoxy silane may also be used in combination depending on the purpose.

As the (a) siloxane polymer, for example, a commercially available organosiloxane polymer such as Shin-Etsu Silicone's X40-9220 or X40-9225, or GE Toray Silicone's XR31-B1410, XR31-B0270 or XR31-B2733 may be used.

As the (b) hydroxyl group-containing siloxane polymer contained in the condensation-curable silicone composition, for example, a compound represented by the following formula (2) may be used.

[Formula 2]

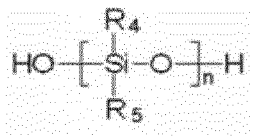

In Formula 2, $R_4$ and $R_5$ each independently represent a hydrogen atom or a substituted or unsubstituted monovalent hydrocarbon group, where when a plurality of $R_4$ and $R_5$ are present, they may be the same or different from each other, and n represents an integer of 5 to 2,000.

In the definition of Formula 2, the specific type of the monovalent hydrocarbon group may include, for example, the same hydrocarbon group as the case of Formula 1 above.

The (b) siloxane polymer may be produced, for example, by hydrolyzing and condensing dialkoxysilane and/or dichlorosilane, and the like. An average technician in this field can easily select an appropriate dialkoxysilane or dichlorosilane according to the desired (b) siloxane polymer, and can also easily control the conditions of the hydrolysis and condensation reactions using the same. As the (b) siloxane polymer as above, a commercially available bifunctional organosiloxane polymer, such as GE Toray Silicone's XC96-723, YF-3800 or YF-3804, and the like may be used.

The type of the pressure-sensitive adhesive or adhesive having vertical orientation force is not particularly limited, which may be appropriately selected depending on the desired use. For example, a solid pressure-sensitive adhesive or adhesive, a semi-solid pressure-sensitive adhesive or adhesive, an elastic pressure-sensitive adhesive or adhesive, or a liquid pressure-sensitive adhesive or adhesive may be appropriately selected and used. The solid pressure-sensitive adhesive or semi-solid pressure-sensitive adhesive or elastic pressure-sensitive adhesive may be referred to as a pressure sensitive adhesive (PSA), which may be cured before an adhesive object is bonded. In the present application, for example, a polydimethyl siloxane pressure-sensitive adhesive or a polymethylvinyl siloxane pressure-sensitive adhesive may be used as the PSA type pressure-sensitive adhesive having vertical orientation force, and an alkoxy silicone adhesive may be used as the OCR type adhesive having vertical orientation force, without being limited thereto.

The thickness of the pressure-sensitive adhesive layer or adhesive layer is not particularly limited, which may be selected in an appropriate range for securing the desired adhesive force. The thickness may be in the range of approximately 1μm to 50μm. In another example, the thickness may be 2μm or more, 3μm or more, 4μm or more, 5μm or more, 6μm or more, 7μm or more, 8μm or more, 9μm or more, or 10μm or more, or may also be 45μm or less, 40μm or less, 35μm or less, 30μm or less, 25μm or less, 20μm or less, 15μm or less, or 10μm or less or so.

By comprising the pressure-sensitive adhesive layer or the adhesive layer under the above arrangement, it is possible to provide a light modulating device that light leakage can be controlled, especially in a black mode, to represent

excellent optical properties, while having excellent adhesive force.

In the light modulating device, a liquid crystal alignment film may or may not be formed on the first surface of the second substrate (the surface facing the first surface of the first substrate). When the liquid crystal alignment film is formed, the type of the alignment film formed on the first surface of the second substrate is not particularly limited. That is, as the alignment film, a known vertical or horizontal alignment film or other alignment films may be applied in consideration of the desired initial orientation. As for the type of alignment film, a contact alignment film such as a rubbing alignment film or a non-contact alignment film such as a photo alignment film may be applied.

A liquid crystal layer may be present between the pressure-sensitive adhesive layer or adhesive layer of the first substrate and the alignment film of the second substrate. The liquid crystal layer is a functional layer capable of changing light transmittance, reflectivity, haze and/or color, either alone or in conjunction with other components, depending on whether or not an external signal is applied. In this specification, the external signal may mean an external factor, for example, an external voltage, that may affect the behavior of a material included in the liquid crystal layer, for example, a light modulation material. Therefore, the state where there is no external signal may mean a state where there is no application of an external voltage or the like.

The liquid crystal layer is a layer comprising a liquid crystal compound, and as described below, a so-called guest-host layer comprising a liquid crystal compound (liquid crystal host) and a dichroic dye, or a layer comprising other additives such as a chiral dopant together with the liquid crystal compound is also a kind of liquid crystal layer prescribed in this specification. The liquid crystal compound may be present in the liquid crystal layer so that the orientation direction changes depending on whether or not an external signal is applied. As the liquid crystal compound, any kind of liquid crystal compound may be used as long as its orientation direction can be changed by application of an external signal.

The liquid crystal layer may comprise a liquid crystal compound having a positive or negative dielectric constant anisotropy. The absolute value of the dielectric constant anisotropy of the liquid crystal may be appropriately selected in consideration of the purpose of the present application. The term dielectric constant anisotropy ($\Delta\varepsilon$) may mean a difference ($\varepsilon// - \varepsilon\perp$) between the horizontal dielectric constant ($\varepsilon//$) and the vertical dielectric constant ($\varepsilon\perp$). **In** this specification, the term horizontal dielectric constant ($\varepsilon//$) means a dielectric constant value measured along the direction of an electric field in a state where a voltage is applied so that the director of the liquid crystal and the direction of the electric field by the applied voltage are substantially horizontal, and the vertical dielectric constant ($\varepsilon\perp$) means a dielectric constant value measured along the direction of an electric field in a state where a voltage is applied so that the director of the liquid crystal and the direction of the electric field by the applied voltage are substantially perpendicular.

**In** order to achieve the above-described d/p ratio, the liquid crystal layer may comprise a chiral dopant together with the liquid crystal compound (or may also be referred to as liquid crystal molecules). By adjusting the content of the chiral dopant together with the thickness (cell gap) of the liquid crystal layer, the d/p ratio can be adjusted.

As the chiral dopant included in the liquid crystal layer, a known compound may be applied without any particular limitation. The chiral dopant may be used without any particular limitation, as long as it can induce a desired twisting without impairing liquid crystallinity, for example, nematic regularity. The chiral dopant for inducing rotation in the liquid crystal molecules needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S811 commercially available from Merck Co., Ltd. or BASF's LC756 may also be used.

The content of the chiral dopant in the liquid crystal layer may be appropriately selected in consideration of the purpose of the present application. For example, the content of the chiral dopant in the liquid crystal layer may be 0.1 weight% or more, 0.25 weight% or more, 0.5 weight% or more, 0.75 weight% or more, 1 weight% or more, 1.25 weight% or more, 1.5 weight% or more, 2 weight% or more, 2.5 weight% or more, or 2.7 weight% or more. The upper limit of the content of the chiral dopant in the liquid crystal layer may be, for example, 10 weight% or less, 9 weight% or less, 8 weight% or less, 7 weight% or less, 6 weight% or less, 5.0 weight% or less, 4.0 weight% or less, 3.5 weight% or less, 3.0 weight% or less, 2.75 weight% or less, 2.5 weight% or less, 2.25 weight% or less, 2.0 weight% or less, 1.75 weight% or less, or 1.5 weight% or less. When the content of the chiral dopant in the liquid crystal layer satisfies the above range, it is possible to provide a light modulating device having excellent transmittance variable characteristics.

The application ratio of the chiral dopant is selected so that the ratio d/p can be achieved. In general, the content (weight%) of the chiral dopant can be calculated by an equation of 100/HTP (helical twisting power) $\times$ pitch (p) (nm). The HTP indicates the strength of the twist of the chiral dopant, and the content of the chiral dopant may be determined in consideration of a desired pitch with reference to the above method.

The liquid crystal layer may further comprise a dichroic dye together with the liquid crystal compound in terms of adjusting the light transmittance variable characteristics, and as described above, the liquid crystal layer of such a case may be referred to as a guest host liquid crystal layer. In this specification, the dye may mean a material capable of intensively absorbing and/or modifying light in the visible light region, for example, at least a part or the entire range within

the 400 nm to 700 nm wavelength range, and the term "dichroic dye" may mean a material capable of anisotropic absorption of light in at least a part or the entire range of the visible light region. In this specification, the "GHLC layer (guest host liquid crystal layer)" may mean a functional layer that dichroic dyes are arranged together depending on arrangement of liquid crystals to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

As the dichroic dye, for example, a known dye known to have properties that can be aligned depending on the alignment state of the liquid crystal compound by a so-called host guest effect can be selected and used. An example of such a dichroic dye includes an azo dye, an anthraquinone dye, a methine dye, an azomethine dye, a merocyanine dye, a naphthoquinone dye, a tetrazine dye, a phenylene dye, a quaterrylene dye, a benzothiadiazole dye, a diketopyrrolopyrrole dye, a squaraine dye or a pyromethene dye, but the dye applicable in the present application is not limited to the foregoing.

As the dichroic dye, a dye having a dichroic ratio, that is, a value obtained by dividing the absorption of the polarized light parallel to the long axis direction of the anisotropic dye by the absorption of the polarized light parallel to the direction perpendicular to the long axis direction, of 5 or more, 6 or more, or 7 or more, can be used. The dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal layer may be appropriately selected in consideration of the purpose of the present application. For example, the content of the dichroic dye in the liquid crystal layer may be 0.1 weight% or more, 0.25 weight% or more, 0.5 weight% or more, 0.75 weight% or more, 1 weight% or more, 1.25 weight% or more, 1.5 weight% or more, 2 weight% or more, 2.5 weight% or more, or 2.7 weight% or more. The upper limit of the content of the dichroic dye in the liquid crystal layer may be, for example, 10 weight% or less, 9 weight% or less, 8 weight% or less, 7 weight% or less, 6 weight% or less, 5.0 weight% or less, 4.0 weight% or less, 3.5 weight% or less, 3.0 weight% or less, 2.75 weight% or less, 2.5 weight% or less, 2.25 weight% or less, 2.0 weight% or less, 1.75 weight% or less, or 1.5 weight% or less. When the content of the dichroic dye in the liquid crystal layer satisfies the above range, it is possible to provide a light modulating device having excellent transmittance variable characteristics. In one example, as the content of the dichroic dye increases within the above range, it is possible to provide a light modulating device having excellent transmittance variable characteristics.

The type and physical properties of the liquid crystal compound may be appropriately selected in consideration of the purpose of the present application. In one example, the liquid crystal molecule may be a nematic liquid crystal or a smectic liquid crystal. The nematic liquid crystals may mean liquid crystals in which rod-shaped liquid crystal molecules are arranged in parallel in the long axis direction of the liquid crystal molecules although there is no regularity in their positions, and the smectic liquid crystals may mean liquid crystals that rod-shaped liquid crystal molecules are arranged regularly to form a layered structure and arranged in parallel with regularity in the long axis direction. According to one example of the present application, a nematic liquid crystal may be used as the liquid crystal molecule.

In one example, the liquid crystal molecule may be a non-reactive liquid crystal molecule. The non-reactive liquid crystal molecule may mean a liquid crystal molecule without any polymerizable group. Here, the polymerizable group may be exemplified by an acryloyl group, an acryloyloxy group, a methacryloyl group, a methacryloyloxy group, a carboxyl group, a hydroxyl group, a vinyl group or an epoxy group, and the like, but is not limited thereto, and may include a known functional group known as the polymerizable group.

The refractive index anisotropy of the liquid crystal molecules may be appropriately selected in consideration of desired physical properties, for example, transmittance variable characteristics. In this specification, the term refractive index anisotropy may mean a difference between an extraordinary refractive index and an ordinary refractive index of the liquid crystal molecules. The refractive index anisotropy of the liquid crystal molecules may be, for example, 0.01 to 0.3. The refractive index anisotropy may be 0.01 or more, 0.05 or more, or 0.07 or more, and may be 0.3 or less, 0.2 or less, 0.15 or less, or 0.13 or less. When the refractive index anisotropy of the liquid crystal molecules is within the above range, it is possible to provide a light modulating device having excellent transmittance variable characteristics. In one example, as the refractive index of the liquid crystal molecules is lower within the above range, it is possible to provide a light modulating device having excellent transmittance variable characteristics.

The dielectric constant anisotropy of the liquid crystal molecules may have positive dielectric constant anisotropy or negative dielectric constant anisotropy in consideration of a driving method of a target liquid crystal cell. In this specification, the term dielectric constant anisotropy may mean a difference between an extraordinary dielectric constant ($\varepsilon e$) and an ordinary dielectric constant ($\varepsilon o$) of the liquid crystal molecules. The dielectric constant anisotropy of the liquid

crystal molecules may be, for example, in a range within ±40, within ±30, within ±10, within ±7, within ±5 or within ±3. When the dielectric constant anisotropy of the liquid crystal molecules is controlled within the above range, it may be advantageous in terms of driving efficiency of the light modulation element.

The total weight of the liquid crystal molecules of the liquid crystal compound and the dichroic dye in the liquid crystal layer may be, for example, about 60 weight% or more, 65 weight% or more, 70 weight% or more, 75 weight% or more, 80 weight% or more, 85 weight% or more, 90 weight% or more, or 95 weight% or more, and in another example, it may be less than about 100 weight%, 98 weight% or less, or 96 weight% or less.

The liquid crystal layer may switch an orientation state depending on whether or not a voltage is applied. The voltage may be applied, for example, in a direction perpendicular to the first and second substrates.

In one example, the liquid crystal layer may exist in a twist state when no voltage is applied, and may exist in a vertical orientation state when a voltage is applied. In the twist orientation state, the twist angle may be, for example, greater than 500 degrees. Such a liquid crystal cell may be referred to as an HTN (highly twisted nematic) driving mode liquid crystal cell. The upper limit of the twist angle may be, for example, 3,000 degrees or less. In this specification, the twist angle may be calculated by the following general formula 1.

[General Formula 1]

$$\text{Twist angle (A)} = a+b\times 360$$

In General Formula 1 above, a is an angle formed by the optical axis of the liquid crystal molecule present at the lowermost portion and the optical axis of the liquid crystal molecule present at the uppermost portion in the liquid crystal layer in the twist orientation state, and b is the number of pitches.

According to one example of the present application, the twist angle may be about 550 degrees or more, 600 degrees or more, 650 degrees or more, 700 degrees or more, 750 degrees or more, 800 degrees or more, 850 degrees or more, 900 degrees or more, 950 degrees or more, 1,000 degrees or more, 1120 degrees or more, 1240 degrees or more, 1360 degrees or more, 1480 degrees or more, 1600 degrees or more, 1720 degrees or more, or 1840 degrees or more. The lower limit of the twist angle may be about 2900 degrees or less, 2800 degrees or less, 2700 degrees or less, 2600 degrees or less, 2500 degrees or less, 2400 degrees or less, 2300 degrees or less, 2200 degrees or less, 2160 degrees or less, 2130 degrees or less, 2100 degrees or less, 2070 degrees or less, 2040 degrees or less, 2010 degrees or less, 1980 degrees or less, 1950 degrees or less, or 1920 degrees or less.

The present application may provide a light modulating device having an excellent transmittance variable level while implementing low transmittance by applying the HTN liquid crystal driving mode.

In the twist orientation liquid crystal layer, the liquid crystal molecules may have a spiral structure in which the light axes are oriented in layers while being twisted along a virtual helix axis. The light axis of the liquid crystal molecule may mean the slow axis of the liquid crystal molecule, where the slow axis of the liquid crystal molecule may be parallel to the long axis of the rod-shaped liquid crystal molecule. The helix axis may be formed to be parallel to the thickness direction of the liquid crystal layer. In this specification, the thickness direction of the liquid crystal layer may mean a direction parallel to a virtual line connecting the lowermost portion and the uppermost portion of the liquid crystal layer at the shortest distance. In one example, the thickness direction of the liquid crystal layer may be a direction parallel to a virtual line formed in a direction perpendicular to the surface of the polymer substrate.

The ratio (d/p) of the thickness (d) to the pitch (p) of the liquid crystal layer in the twist orientation state may exceed 2.8. When the ratio (d/p) exceeds 2.8, the liquid crystal layer may exist in a twist state when no voltage is applied, and the twist angle of liquid crystal molecules in the liquid crystal layer in this twist orientation state may be 860 degrees or more. Such a liquid crystal cell may be referred to as an HTN (highly twisted nematic) driving mode liquid crystal cell. In addition, when the ratio (d/p) is 2.8 or less, an increase in initial transmittance occurs, whereby the object of the present application intended to implement low transmittance cannot be achieved, so that the above range is preferable.

When the ratio (d/p) of the thickness (d) to the pitch (p) of the liquid crystal layer exceeds 10, the driving voltage is increased, so that the upper limit of the ratio (d/p) may be adjusted to 10 or less. According to the claimed invention, the d/p ratio is 2.8 or more and 7 or less. In another example, the d/p may be 2.9 or more, 3 or more, 3.1 or more, 3.2 or more, 3.3 or more, 3.4 or more, 3.5 or more, 3.6 or more, 3.7 or more, 3.8 or more, 3.9 or more, 4 or more, 4.1 or more, 4.2 or more, 4.3 or more, 4.4 or more, 4.5 or more, 4.6 or more, 4.7 or more, or 4.8 or more, or may also be 6 or less, 5 or less, 5.7 or less, 5.5 or less, 5.4 or less, 5.3 or less, 5.2 or less, 5.1 or less, 5.0 or less, 4.9 or less, 4.7 or less, 4.5 or less, or about 4 or less or so.

The thickness (d) of the liquid crystal layer may have the same meaning as a cell gap. In the present application, the thickness (d) of the liquid crystal layer may be in the range of 0.1μm to 50μm, and in another example, it may be 0.5μm or more, 1μm or more, 2μm or more, 3μm or more, 4μm or more, 5μm or more, 6μm or more, 7μm or more, 8μm or more, 9μm or more, 10μm or more, 11μm or more, or 11.5μm or more, or may be 45μm or less, 40μm or less, 35μm or less, 30μm or less, 25μm or less, 20μm or less, 15μm or less, 10μm or less, 9μm or less, or 8μm or less.

The pitch (p) of the liquid crystal layer can be measured by a measurement method using a wedge cell, and specifically, can be measured by a method described in D. Podolskyy et al., Simple method for accurate measurements of the cholesteric pitch using a "stripe-wedge Grandjean-Cano cell" (Liquid Crystals, Vol. 35, No. 7, July 2008, 789-791).

As described above, the ratio (d/p) may be achieved through adjustment of the thickness of the liquid crystal layer and the content of the chiral dopant in the liquid crystal layer.

In a guest host liquid crystal system using a conventional ball spacer, when the HTN liquid crystal driving mode was applied to implement low transmittance, liquid crystal defects occurred, resulting a problem in visibility. When the content of the chiral dopant was lowered to solve the visibility problem, the transmittance in the black state was increased, so that low transmittance could not be implemented.

In the light modulating device of the present application, a structure using a pressure-sensitive adhesive layer or an adhesive layer and a partition-wall spacer, which is described below, together is applied, whereby liquid crystal defects do not occur in the HTN liquid crystal driving mode, and the chiral dopant content can be increased to reduce the pitch, whereby absorption of transmitted light can be increased, so that it is possible to efficiently implement transparent and black states of the light modulating device.

In the light modulating device of the present application, the distance between the first substrate and the second substrate may be maintained by a partition wall spacer. As the partition wall spacer, a honeycomb or quadrangular partition wall spacer, a triangular partition wall spacer, or a random spacer may be applied.

Here, the honeycomb, rectangular or triangular partition wall spacer means a case where a figure formed by the partition wall spacer when the shape of the partition wall spacer formed on the substrate is observed in the normal direction of the substrate is a honeycomb type, a quadrangle or a triangle, as is known. Usually, the honeycomb type may be a combination of regular hexagons, and the quadrangle may be a combination of squares, rectangles, or squares and rectangles. In the above structure, the hexagon, quadrangle or triangle may or may not be a regular hexagon, square or equilateral triangle, respectively.

Also, here, the random spacer is a case where the partition walls are randomly arranged, which means a case where the partition walls do not form a figure or even in the case of forming it, they form a figure randomly rather than a standardized figure.

The pitch (P) of the partition wall spacer may be appropriately selected in consideration of the desired attachment force or cell gap maintenance efficiency, and the like.

For example, the pitch P of the partition wall spacer may be in the range of 100 μm to 1,000 μm. In another example, the pitch may be 150 μm or more, 200 μm or more, 250 μm or more, 300 μm or more, 350 μm or more, 400 μm or more, 450 μm or more, 500 μm or more, or 550 μm or more, or may also be 950 μm or less, 900 μm or less, 850 μm or less, 800 μm or less, 750 μm or less, 700 μm or less, 650 μm or less, 600 μm or less, 550 μm or less, 500 μm or less, 450 μm or less, or 300 μm or less. A method for obtaining a pitch in a partition wall spacer is well known. For example, if the partition wall spacer is of a honeycomb type, the pitch is obtained through the spacing between the sides facing each other in the hexagon constituting the honeycomb, and if it is of a quadrangle or a triangle, the length of the side of the quadrangle or triangle is set as the pitch. When the spacing between the sides facing each other in the hexagon constituting the honeycomb or the length of the side of the quadrangle or triangle is not constant, the average value thereof may be defined as the pitch. In addition, when the partition wall spacer is of a random type, the average value (average interval) of the intervals between the respective partition walls may be defined as the pitch.

A line width of the partition wall spacer, for example, a width of each side of a hexagon constituting the honeycomb or a quadrangle may be, for example, in a range of about 5 μm to 50 μm. In another example, the line width may be about 10 μm or more, 15 μm or more, 20 μm or more, or 25 μm or more, or may be 45 μm or less, 40 μm or less, 35 μm or less, 30 μm or less, 25 μm or less, or 20 μm or less.

In such a range, the cell gap may be properly maintained, and the attachment force between the substrates may also be maintained excellently.

Meanwhile, the height of the partition wall spacer may be adjusted in consideration of the distance between the upper substrate and the lower substrate. In the present application, the height of the partition wall spacer approximately coincides with the thickness (cell gap) of the liquid crystal layer and means the dimension of the spacer measured in the normal direction of the surface of the substrate. For example, the height of the partition wall spacer may be in the range of 0.1μm to 50μm, and in another example, it may be 1μm or more, 2μm or more, 3μm or more, 4μm or more, 5μm or more, 6μm or more, 7μm or more, or 8μm or more, or may be 45μm or less, 40μm or less, 35μm or less, 30μm or less, 25μm or less, 20μm or less, 15μm or less, 10μm or less, 9μm or less, or 8μm or less, but is not limited thereto. At this time, when the height of the spacer is not constant, the height may be a measured maximum height or minimum height, or an average value of the maximum and minimum heights.

In the present application, the spacer may be manufactured by applying a conventional method for manufacturing a spacer in the form of a partition wall. In general, the spacer in the form of a partition wall may be manufactured by a method (e.g., imprinting method, etc.) using a curable resin composition. Therefore, the spacer of the present application may comprise a cured product of a curable resin composition. As the curable resin composition, a known type applied for

spacer formation may be applied without any particular limitation. Such a resin composition includes usually a heat-curable resin composition or a photo-curable resin composition, for example, an ultraviolet-curable resin composition.

As the heat-curable resin composition, for example, a silicone resin composition, a fran resin composition, a polyurethane resin composition, an epoxy resin composition, an amino resin composition, a phenol resin composition, a urea resin composition, a polyester resin composition or a melamine resin composition, and the like may be used, without being limited thereto.

As the ultraviolet curable resin composition, a resin composition comprising, typically an acrylic polymer, for example, a polyester acrylate polymer, a polystyrene acrylate polymer, an epoxy acrylate polymer, a polyurethane acrylate polymer or a polybutadiene acrylate polymer, a silicone acrylate polymer or an alkyl acrylate polymer, and the like may be used, without being limited thereto. In another example, it may also be formed using a silicone polymer, and when the spacer is formed using a silicone polymer, the silicone polymer remaining in the concave region of the spacer may serve as a vertical alignment film, so that as described below, no additional vertical alignment film may also be used on the substrate where the spacers are present. As the silicone polymer, a known polymer having bonds of silicon and oxygen (Si-O-Si) as a main axis may be used, and for example, polydimethylsiloxane (PDMS) may be used, without being limited thereto.

By controlling the shape, arrangement and/or arrangement method of spacers as above, the present application can provide a light modulating device minimizing liquid crystal defects to have improved visibility while maintaining the cell gap properly and having excellent adhesive force between upper and lower film substrates.

In order to achieve the above effect, the relationship between the partition wall spacer and the liquid crystal layer may be further adjusted. For example, in the light modulating device, the ratio (p1/d) of the pitch (p1) of the partition wall spacer to the thickness (d) of the liquid crystal layer may be in the range of 10 to 100. In another example, the ratio may be 15 or more, 20 or more, 25 or more, 30 or more, 35 or more, 40 or more, 45 or more, 50 or more, or 55 or more, or may also be 95 or less, 90 or less, 85 or less, 80 or less, 75 or less, 70 or less, 65 or less, 60 or less, 55 or less, 50 or less, 45 or less, or 40 or less or so.

Also, in the light modulating device, the ratio (p1/p) of the pitch (p1) of the partition wall spacer to the pitch (pitch in a twist orientation state, p) of the liquid crystal layer may be in the range of 50 to 500. In another example, the ratio may be 60 or more, 70 or more, 80 or more, 90 or more, 100 or more, 110 or more, 120 or more, 130 or more, 140 or more, 150 or more, 160 or more, 170 or more, 180 or more, 190 or more, 200 or more, or 210 or more, or may also be 450 or less, 400 or less, 350 or less, 300 or less, 250 or less, 200 or less, or 190 or less or so.

Within such ranges, it is possible to more effectively secure the desired performance of the optical device.

As depicted in Figs. 1 and 2, the light modulating device of the present application further comprises an electrode layer (500) on one side of each of the first substrate and the second substrate, as long as the effects of the present application are not hindered. In one example, each electrode layer (500) may be formed between the first surface of the first substrate and the pressure-sensitive adhesive layer or adhesive layer and/or between the first surface of the second substrate and the alignment film.

The electrode layer may apply an appropriate electric field to the liquid crystal layer so that the alignment state of the liquid crystal molecules can be switched. The direction of the electric field may be a vertical or horizontal direction, for example, the thickness direction or plane direction of the liquid crystal layer.

The electrode layer may be, for example, a transparent conductive layer. The transparent conductive layer may be formed by depositing, for example, a conductive polymer, a conductive metal, a conductive nanowire or a metal oxide such as ITO (indium tin oxide), and the like. Besides, various materials and formation methods capable of forming the transparent conductive layer are known, which can be applied without limitation.

The light modulating device of the present application may comprise other additional components as needed. That is, depending on the driving mode, the implementation of the above-described transparent mode and black mode and the switching between them are possible even with the light modulating device having the above-described structure alone, but in order to facilitate the implementation or switching of these modes, it is also possible to include additional components.

For example, the device may further comprise a polarization layer on the second surface of the first and/or second substrate. The term polarization layer may mean an element that converts natural light or unpolarized light into polarized light. In one example, the polarization layer may be a linear polarization layer. The linear polarization layer means a case where the selectively transmitting light is linearly polarized light that vibrates in any one direction and the selectively absorbing or reflecting light is linearly polarized light that vibrates in directions orthogonal to the vibration direction of the linearly polarized light. That is, the linear polarization layer may have a transmission axis and absorption axes or reflection axes orthogonal to each other in the plane direction.

The polarization layer may be an absorptive polarization layer or a reflective polarization layer. As the absorptive polarization layer, for example, a polarization layer in which iodine is dyed to a polymer stretched film such as a PVA stretched film, or a guest-host polarization layer in which liquid crystals polymerized in an oriented state are used as a host and dichroic dyes arranged along the orientation of the liquid crystals are used as a guest may be used, without being limited thereto. As the reflective polarization layer, for example, a reflective polarization layer known as a so-called DBEF

(dual brightness enhancement film) or a reflective polarization layer formed by coating a liquid crystal compound such as LLC (lyotropic liquid crystal) may be used, but is not limited thereto.

However, in one example, the light modulating device may not comprise the polarization layer.

The above-described light modulating device may exist in a twist orientation state, when no voltage is applied, to exhibit minimum transmittance, and may exist in a vertically aligned state, when a voltage is applied, to exhibit maximum transmittance.

The transmittance of the light modulating device in the transparent mode state exhibiting the maximum transmittance may be at least 20% or more, 21% or more, 22% or more, 23% or more, 24% or more, 25% or more, 26% or more, 27% or more, 28% or more, 29% or more, 30% or more, 31% or more, 32% or more, 33% or more, 34% or more, 35% or more, 40% or more, 45% or more, 50% or more, 55% or more, 60% or more, 65% or more, 70% or more, or 80% or more or so. The transmittance of the light modulating device in the black mode state exhibiting the minimum transmittance may be 10% or less, 9% or less, 8% or less, 7% or less, 6% or less, 5% or less, 4% or less, 3% or less, 2% or less, 1% or less, 0.9% or less, 0.8% or less, 0.7% or less, 0.6% or less, 0.5% or less, 0.4% or less, or 0.3% or less.

The higher the transmittance in the transparent mode, the more advantageous it is, and the lower the transmittance in the black mode, the more advantageous it is, so that the upper limit of the transmittance in the transparent mode and the lower limit of the transmittance in the black mode are not particularly limited. In one example, the upper limit of the transmittance in the transparent mode state may be about 100%, and the lower limit of the transmittance in the black mode state may be about 0%.

In one example, the light modulating device of the present application may implement the transmittance in a state without the polarization layer.

In one example, the difference (transparent mode-black mode) between the transmittance in the transparent mode state and the transmittance in the black mode state in the light modulating device may be 25% or more, 26% or more, 27% or more, 28% or more, 29 % or more, 30% or more, 35% or more, or 40% or more. In addition, it may also be 90% or less, 85% or less, 80% or less, 75% or less, 70% or less, 65% or less, 60% or less, 55% or less, 50% or less, 45% or less, 44% or less, 43% or less, 42% or less, 41% or less, 40% or less, 39% or less, 38% or less, 37% or less, 36% or less, 35% or less, 34% or less, 33% or less, 32% or less, or 31% or less.

The present application can provide a light modulating device having an excellent transmittance variable level (difference between transmittance in the transparent state and transmittance in the black mode state) while implementing low transmittance in the black mode state as above.

The above-mentioned transmittance may be transmittance measured by the method described in Examples to be described below.

The above-mentioned transmittance and reflectance may be transmittance or reflectance for any one wavelength within the visible light region, for example, about 400 to 700 nm or about 380 to 780 nm, or may be transmittance or reflectance for the entire visible light region, or may be maximum or minimum transmittance or reflectance among transmittance or reflectance for the entire visible light region, or may be an average value of transmittance or reflectance within the visible light region, respectively.

Such a light modulating device can be applied to various applications. The application, to which the light modulating device can be applied, includes a window used as glass for buildings or sunroofs for vehicles, but is not limited thereto. For example, the application applied to openings in closed spaces including buildings, containers or vehicles, such as glass or sunroofs, or eyewear, and the like, or windows and doors, light shielding plates of OLEDs (organic light emitting devices), and the like can be exemplified. Here, in the range of eyewear, all eyewear formed so that an observer can observe the outside through lenses, such as general glasses, sunglasses, sports goggles or helmets, or a wearable device such as an instrument for experiencing virtual reality or augmented reality can be included.

A typical application capable of being applied by the light modulating device of the present application may include a vehicle sunroof. In one example, the light modulating device per se may be a vehicle sunroof. For example, in a vehicle comprising a vehicle body in which at least one or more openings are formed, the light modulating device or the vehicle sunroof mounted on the opening may be mounted and used.

The sunroof is a fixed or operating (venting or sliding) opening on a ceiling of a vehicle, which may mean collectively a device that can function to allow light or fresh air to enter the interior of the vehicle. In the present application, the method of operating the sunroof is not particularly limited, and for example, it can be manually operated or driven by a motor, where the shape, size or style of the sunroof may be appropriately selected according to the intended use. For example, according to the operation method, the sunroof may be exemplified by a pop-up type sunroof, a spoiler (tile & slide) type sunroof, an inbuilt type sunroof, a folding type sunroof, a top-mounted type sunroof, a panoramic roof system type sunroof, a removable roof panels (t-tops or targa roofts) type sunroof or a solar type sunroof, and the like, but is not limited thereto.

An exemplary sunroof of the present application may comprise the light modulating device of the present application, and in this case, as for the details of the light modulating device, the contents described in the items of the light modulating device may be equally applied.

[Effects of Invention]

In the present application, it is possible to provide a light modulating device which has a wide transmittance variable range and does not cause problems such as liquid crystal defects or visibility deterioration, while implementing low transmittance in a black mode, and its use.

[Brief Description of Drawings]

Figures 1 and 2 are schematic diagrams of a structure of an exemplary light modulating device.

Figure 3 is an optical photograph for confirming liquid crystal defects of the light modulating device of Comparative Example 1.

Figure 4 is an optical photograph for confirming liquid crystal defects of the light modulating device of Example 1.

Figure 5 is an optical photograph for confirming liquid crystal defects of the light modulating device of Example 2.

Figures 6 and 7 are views related to the content of evaluating the thickness (cell gap) of a liquid crystal cell.

[Mode for Invention]

Hereinafter, the present application will be described in more detail through Examples and Comparative Examples, but the scope of the present application is not limited to the following Examples.

**1. Evaluation of thickness (cell gap) of liquid crystal cell**

A thickness of a liquid crystal cell, that is, a cell gap, was measured using a spectrometer in the following manner. As shown in Figure 6, one side of the liquid crystal cell having a cell gap (d) is irradiated with light ($I_I$), and light ($I_T$) transmitted from the other side is measured. Upon irradiation of the light, the irradiation angle is parallel to the virtual surface normal direction of the transmittance variable layer. When the transmittance for each wavelength is checked in this way, a transmittance graph as shown in Figure 7 can be obtained due to constructive interference or the like. In Figure 7, the X-axis is the wavelength (nm), and the Y-axis is the transmittance (%). The graph obtained as shown in Figure 7 has a relationship of Equation E below with the cell gap (d), which is the thickness of the transmittance variable layer, where in Equation E below, $\kappa$ is the number of peaks present between the wavelength $\lambda_1$ and the wavelength $\lambda_2$ in Figure 7. That is, from the graph obtained as shown in Figure 7, the cell gap (d) can be obtained by obtaining the number of peaks between the wavelength $\lambda_1$ and the wavelength $\lambda_2$, which is the $\kappa$, and substituting the wavelengths $\lambda_1$ and $\lambda_2$ into Equation E.

[Equation E]

$$d = \frac{\kappa}{2(1/\lambda 1 - 1/\lambda 2)}$$

**Example 1**

In a PET (poly(ethylene terephthalate)) film (first substrate) having a thickness of 125 μm or so in which an ITO (indium tin oxide) layer was deposited on a first surface to a thickness of about 30 nm or so, a silicone pressure-sensitive adhesive layer was formed on the ITO layer. The pressure-sensitive adhesive layer was formed to a thickness of about 10 μm or so by bar-coating a silicone pressure-sensitive adhesive composition (Shinetsu, KR3700) known as a so-called OCA (optically clear adhesive) on the ITO layer, drying it at about 150°C or so for 5 minutes.

In a PET (poly(ethylene terephthalate)) film (second substrate) having a thickness of 125 μm or so in which an ITO (indium tin oxide) layer was deposited on a first surface to a thickness of about 30 nm or so, a partition wall spacer, of a regular hexagon (closed figure) constituting a honeycomb, having a pitch of about 450 μm or so, a height (cell gap) of about 12 μm or so and a line width of about 30 μm or so, as a honeycomb type partition wall spacer, was form on the ITO layer.

Therefore, the area of the closed figure (regular hexagon) formed by the partition wall spacer was approximately 2.14 $mm^2$ or so. The partition wall spacer was formed by a conventional photolithography method using an ultraviolet curable acrylic resin composition. A horizontal alignment film (Nissan, SE-7492K) was formed on the spacer to a thickness of about 300 nm or so, and the horizontal alignment film was rubbed in one direction.

A liquid crystal composition was coated on the surface of the horizontal alignment film of the second substrate, and the pressure-sensitive adhesive layer of the first substrate was laminated to face the coated surface of the liquid crystal composition.

Here, as the liquid crystal composition, a composition comprising a liquid crystal compound (JNC, SHN-5011XX), a chiral dopant (HCCH, S811) and a dichroic dye (black dye) was used. The chiral dopant was applied to be an amount of 3.7 weight% in the liquid crystal cell, and the dichroic dye was applied to be an amount of 3 weight% in the liquid crystal cell.

The pitch (p) of the liquid crystal cell thus formed was about 2.5μm or so, and the ratio (d/p) of the cell gap (d) (about 12 μm or so) to the pitch (p) was about 4.8 or so.

Here, the pitch of the liquid crystal cell was measured by a measurement method using a wedge cell according to the method described in the literature of D. Podolskyy et al., Simple method for accurate measurements of the cholesteric pitch using a stripe-wedge Grandjean-Cano cell (Liquid Crystals, Vol. 35, No. 7, July 2008, 789-791).

The liquid crystal cell is an HTN mode liquid crystal cell having a twist angle of 1720 degrees when no voltage is applied.

**Example 2**

A liquid crystal cell was manufactured in the same manner as in Example 1, except that a square-shaped partition wall spacer was applied as the spacer. The square-shaped partition wall spacer had a pitch of about 450 μm, a height of about 10 μm, and a line width of about 30 μm or so.

In addition, the pitch (p) of the formed liquid crystal cell was about 2.5 μm or so, and the ratio (d/p) of the cell gap (d) (about 10μm) to the pitch (p) was about 4.0 or so.

The liquid crystal cell of Example 2 is also an HTN mode liquid crystal cell having a twist angle of 1720 degrees when no voltage is applied.

**Example 3**

A liquid crystal cell was prepared in the same manner as in Example 1, except that the following steps were performed. A square-shaped partition wall spacer as the spacer was formed on the ITO (indium tin oxide) layer of the second substrate. The square-shaped partition wall spacer had a pitch of about 350 μm, a height of about 6.3 μm, and a line width of about 30 μm or so. A liquid crystal cell was manufactured in the same manner as in Example 1, except that an alignment film was not formed on the partition wall spacer of the second substrate.

The pitch (p) of the liquid crystal cell was about 1.6 μm or so, and the ratio (d/p) of the cell gap (d) to the pitch (p) was about 4.0 (= about 3.94) or so. The liquid crystal cell of Example 3 is also an HTN mode liquid crystal cell having a twist angle of 1720 degrees when no voltage is applied.

**Comparative Example 1**

As an alignment film forming material, a polyimide-based material (Nissan, SE-5661) for a vertical alignment film, being a rubbing alignment film forming material, was used. An alignment film formation material was prepared by dissolving the alignment film forming material in a solvent at a concentration of about 3 weight%. As the solvent, a mixed solvent in which PGME (propylene glycol methyl ether) and GBL (gamma-butyrolactone) were mixed in a weight ratio of 7:3 (PGME: GBL) was used. The alignment film formation material was prepared by formulating ball spacers having a diameter of about 12 μm or so in the mixture of the alignment film forming material and the solvent so that the concentration in the entire alignment film formation material was about 1 weight% or so.

The coating material was coated to an appropriate thickness with a bar coater on a PET (poly(ethylene terephthalate)) film having an ITO (Indium Tin Oxide) electrode layer formed on one side, and then subjected to heat treatment at a temperature of about 130°C for about 10 minutes to form a first substrate.

As a second substrate, a PC (polycarbonate) film without any spacer, in which an ITO (indium tin oxide) electrode layer and a known polyimide horizontal alignment film (Nissan, SE-7492K) were sequentially formed on one side as described above, was used.

A liquid crystal cell was manufactured by coating a liquid crystal composition on the surface of the horizontal alignment film of the second substrate, and laminating the vertical alignment film layer of the first substrate to face the coated surface of the liquid crystal composition. As the liquid crystal composition, a composition comprising a liquid crystal compound (JNC, SHN-5011XX), a chiral dopant (HCCH, S811) and a dichroic dye (black dye) was used. The chiral dopant

was included to be an amount of about 2.3 weight% in the liquid crystal cell, and the dichroic dye was included to be an amount of about 3 weight% in the liquid crystal cell.

The thickness (d) of the liquid crystal cell was about 10μm, the pitch (p) was about 4μm or so, and the ratio (d/p) of the cell gap (d) to the pitch (p) was about 2.5 or so. The liquid crystal cell is a liquid crystal cell having a twist angle of 1000 degrees when no voltage is applied.

**Comparative Example 2**

A liquid crystal cell was manufactured in the same manner as in Example 1, except that the thickness (d, cell gap) of the liquid crystal cell was adjusted so that the ratio (d/p) of the cell gap (d) to the pitch (p) was about 2.5 or so.

**Comparative Example 3**

A liquid crystal cell was manufactured in the same manner as in Example 1, except that the thickness (d, cell gap) of the liquid crystal cell was adjusted so that the ratio (d/p) of the cell gap (d) to the pitch (p) was about 12 or so.

**Experimental Example 1.**

The transmittance variable rates of the liquid crystal cells prepared in Examples and Comparative Examples were evaluated.

The transmittance was measured using a haze meter (NDH5000SP, Sekos) according to ASTM D1003 standard. When light with a wavelength of 380 nm to 780 nm is incident on the measurement object in the integrating sphere, the incident light is divided into diffused light (DT, sum of the diffused and emitted light) and straight light (PT, light emitted from the front direction excluding diffused light) by the measurement object. The diffused light and the straight light can each be measured by condensing them on the light receiving element in the integrating sphere. That is, by the above process, the total transmitted light (TT) is defined as the sum (DT+PT) of the diffused light (DT) and the straight light (PT), and the total transmitted light means total transmittance.

The total transmittance of Comparative Examples and Examples has been shown in Table 1 below, where the black mode is a state (0V) where no voltage is applied to the liquid crystal cell, and the transparent mode is a state where a voltage of 60V is applied to the liquid crystal cell.

[Table 1]

| | | Transmittance (%) | |
|---|---|---|---|
| | | Black mode (0V) | Transparent mode (60V) |
| Example | 1 | 3.2 | 35 |
| | 2 | 3.4 | 36 |
| | 3 | 3.3 | 35 |
| Comparative Example | 1 | 6.5 | 37 |
| | 2 | 6.6 | 36 |
| | 3 | 3 | 17 |

From the results of Table 1, it can be confirmed that the liquid crystal cell according to the present application exhibits high transmittance in the transparent mode relative to the black mode, while exhibiting lower transmittance in the black mode state.

On the other hand, the liquid crystal cells of Comparative Examples 1 and 2 had high transmittance in the black mode, and accordingly, upon the transparent mode, the ratio of transmittance relative to the black mode was not high.

In addition, Comparative Example 3 showed low transmittance in the black mode, but the transmittance upon the transparent mode was not properly secured.

Meanwhile, Figure 3 is an optical photograph of the liquid crystal cell of Comparative Example 1, and Figures 4 and 5 are optical photographs of the liquid crystal cells of Examples 1 and 2, respectively. From the drawings, in the case of Comparative Example 1 in which the partition wall spacer was not applied, an optical defect such as oily streak lines occurred in the mode of the liquid crystal cell of the present application, resulting in a visibility problem.

[Explanation of Reference Numerals]

101: first substrate

103: pressure-sensitive adhesive layer or adhesive layer

201: second substrate

203: liquid crystal alignment film

300: liquid crystal layer

400: partition wall spacer

500: electrode layer

## Claims

1. A light modulating device, comprising:

a first substrate (101) having a first surface;
a first electrode layer formed on the first surface of the first substrate (101),
a pressure-sensitive adhesive layer or an adhesive layer (103) formed on the first electrode layer;
a second substrate (201) having a first surface, and
a second electrode layer formed on the first surface of the second substrate (201),
wherein the first surface of the second substrate (201) faces the first surface of the first substrate (101);
a liquid crystal layer (300) disposed between the first (101) and second (201) substrates; and
a partition wall spacer (400) formed on the second electrode layer,
wherein the partition wall spacer (400) maintains a distance between the first (101) and second (201) substrates,
wherein the pressure-sensitive adhesive layer or an adhesive layer (103) is a silicone-based pressure-sensitive adhesive or adhesive which imparts a vertical orientation force to an adjacent liquid crystal compound and **characterized in that** the liquid crystal layer (300) is configured to implement a twist orientation, and a ratio of the thickness of the liquid crystal layer (300) relative to a pitch of the liquid crystal layer (300) in the twist orientation is more than 2.8 and 7 or less.

2. The light modulating device according to claim 1, wherein an alignment film is not formed on the first substrate (101).

3. The light modulating device according to claim 1 or 2, wherein the partition wall spacer (400) is a honeycomb type spacer, a quadrangle spacer or a random type spacer.

4. The light modulating device according to any one of claims 1 to 3, wherein the partition wall spacer (400) has a pitch in a range of 100μm to 1,000 μm.

5. The light modulating device according to any one of claims 1 to 4, wherein the liquid crystal layer (300) has a thickness in a range of 0.1μm to 50μm.

6. The light modulating device according to any one of claims 1 to 5, wherein a ratio of the pitch of the partition wall spacer (400) relative to the thickness of the liquid crystal layer (300) is in a range of 10 to 100.

7. The light modulating device according to any one of claims 1 to 6, wherein a ratio of the pitch of the partition wall spacer (400) relative to the pitch of the liquid crystal layer (300) is in a range of 50 to 500.

8. The light modulating device according to any one of claims 1 to 7, wherein the liquid crystal layer (300) comprises a liquid crystal compound and a chiral dopant.

**9.** The light modulating device according to claim 8, wherein the liquid crystal layer (300) further comprises a dichroic dye.

**10.** The light modulating device according to any one of claims 1 to 9, wherein a liquid crystal alignment film (203) is formed on the first surface of the second substrate (201).

**11.** The light modulating device according to claim 10, wherein the liquid crystal alignment film (203) is a vertical alignment film or a horizontal alignment film.

**12.** The light modulating device according to any one of claims 1 to 9, wherein a liquid crystal aligning film is not formed on the second substrate (201).

**13.** The light modulating device according to any one of claims 1 to 12, wherein the liquid crystal layer (300) is configured in the twist orientation when no voltage is applied.

**14.** The light modulating device according to any one of claims 1 to 12, wherein the light modulating device exhibits a minimum transmittance when no voltage is applied.

**15.** A window, comprising:
the light modulating device of any one of claims 1 to 14.

## Patentansprüche

**1.** Lichtmodulierende Vorrichtung, umfassend:

ein erstes Substrat (101) mit einer ersten Oberfläche;
eine erste Elektrodenschicht, die auf der ersten Oberfläche des ersten Substrats (101) gebildet ist,
eine druckempfindliche Klebeschicht oder eine Klebeschicht (103), die auf der ersten Elektrodenschicht gebildet ist;
ein zweites Substrat (201) mit einer ersten Oberfläche, und
eine zweite Elektrodenschicht, die auf der ersten Oberfläche des zweiten Substrats (201) gebildet ist,
wobei die erste Oberfläche des zweiten Substrats (201) der ersten Oberfläche des ersten Substrats (101) zugewandt ist;
eine Flüssigkristallschicht (300), die zwischen dem ersten (101) und dem zweiten (201) Substrat angeordnet ist; und
einen Trennwandabstandshalter (400), der auf der zweiten Elektrodenschicht gebildet ist,
wobei der Trennwandabstandshalter (400) einen Abstand zwischen dem ersten (101) und dem zweiten (201) Substrat beibehält,
wobei die druckempfindliche Klebeschicht oder eine Klebeschicht (103) ein druckempfindlicher Klebstoff auf Silikonbasis oder Klebstoff ist, der einer benachbarten Flüssigkristallverbindung eine vertikale Orientierungskraft verleiht, und **dadurch gekennzeichnet, dass** die Flüssigkristallschicht (300) relativ zu einem Abstand der Flüssigkristallschicht (300) in der Verdrehungsorientierung mehr als 2,8 und 7 oder weniger beträgt.

**2.** Lichtmodulierende Vorrichtung nach Anspruch 1, wobei kein Ausrichtungsfilm auf dem ersten Substrat (101) gebildet ist.

**3.** Lichtmodulierende Vorrichtung nach Anspruch 1 oder 2, wobei der Trennwandabstandshalter (400) ein Abstandshalter vom Wabentyp, ein Viereckabstandshalter oder ein Abstandshalter vom Zufallstyp ist.

**4.** Lichtmodulierende Vorrichtung nach einem der Ansprüche 1 bis 3, wobei der Trennwandabstandshalter (400) einen Abstand in einem Bereich von 100 μm bis 1.000 μm aufweist.

**5.** Lichtmodulierende Vorrichtung nach einem der Ansprüche 1 bis 4, wobei die Flüssigkristallschicht (300) eine Dicke in einem Bereich von 0,1 μm bis 50 μm aufweist.

**6.** Lichtmodulierende Vorrichtung nach einem der Ansprüche 1 bis 5, wobei ein Verhältnis des Abstands des Trennwandabstandshalters (400) relativ zu der Dicke der Flüssigkristallschicht (300) in einem Bereich von 10 bis 100 liegt.

7. Lichtmodulierende Vorrichtung nach einem der Ansprüche 1 bis 6, wobei ein Verhältnis des Abstands des Trennwandabstandshalters (400) relativ zu dem Abstand der Flüssigkristallschicht (300) in einem Bereich von 50 bis 500 liegt.

8. Lichtmodulierende Vorrichtung nach einem der Ansprüche 1 bis 7, wobei die Flüssigkristallschicht (300) eine Flüssigkristallverbindung und einen chiralen Dotierstoff umfasst.

9. Lichtmodulierende Vorrichtung nach Anspruch 8, wobei die Flüssigkristallschicht (300) ferner einen dichroitischen Farbstoff umfasst.

10. Lichtmodulierende Vorrichtung nach einem der Ansprüche 1 bis 9, wobei ein Flüssigkristallausrichtungsfilm (203) auf der ersten Oberfläche des zweiten Substrats (201) gebildet ist.

11. Lichtmodulierende Vorrichtung nach Anspruch 10, wobei der Flüssigkristallausrichtungsfilm (203) ein vertikaler Ausrichtungsfilm oder ein horizontaler Ausrichtungsfilm ist.

12. Lichtmodulierende Vorrichtung nach einem der Ansprüche 1 bis 9, wobei kein Flüssigkristallausrichtungsfilm auf dem zweiten Substrat (201) gebildet ist.

13. Lichtmodulierende Vorrichtung nach einem der Ansprüche 1 bis 12, wobei die Flüssigkristallschicht (300) in der Verdrehungsorientierung konfiguriert ist, wenn keine Spannung angelegt wird.

14. Lichtmodulierende Vorrichtung nach einem der Ansprüche 1 bis 12, wobei die lichtmodulierende Vorrichtung eine minimale Durchlässigkeit aufweist, wenn keine Spannung angelegt wird.

15. Fenster, umfassend:
die lichtmodulierende Vorrichtung nach einem der Ansprüche 1 bis 14.

## Revendications

1. Dispositif de modulation de lumière, comprenant :

un premier substrat (101) ayant une première surface ;
une première couche d'électrode formée sur la première surface du premier substrat (101),
une couche adhésive sensible à la pression ou une couche adhésive (103) formée sur la première couche d'électrode ;
un deuxième substrat (201) ayant une première surface, et
une deuxième couche d'électrode formée sur la première surface du deuxième substrat (201),
dans lequel la première surface du deuxième substrat (201) est face à la première surface du premier substrat (101) ;
une couche de cristaux liquides (300) disposée entre les premier (101) et deuxième (201) substrats ; et
un élément d'espacement de paroi de séparation (400) formé sur la deuxième couche d'électrode,
dans lequel l'élément d'espacement de paroi de séparation (400) maintient une distance entre les premier (101) et deuxième (201) substrats,
dans lequel la couche adhésive sensible à la pression ou une couche adhésive (103) est un adhésif sensible à la pression à base de silicone ou un adhésif qui confère une force d'orientation verticale à un composé de cristaux liquides adjacent et **caractérisé en ce que** la couche de cristaux liquides (300) par rapport à un pas de la couche de cristaux liquides (300) dans l'orientation en torsion est supérieure à 2,8 et égale ou inférieure à 7.

2. Dispositif de modulation de lumière selon la revendication 1, dans lequel un film d'alignement n'est pas formé sur le premier substrat (101).

3. Dispositif de modulation de lumière selon la revendication 1 ou 2, dans lequel l'élément d'espacement de paroi de séparation (400) est un élément d'espacement de type nid d'abeilles, un élément d'espacement de quadrangle ou un élément d'espacement de type aléatoire.

4. Dispositif de modulation de lumière selon l'une quelconque des revendications 1 à 3, dans lequel l'élément

d'espacement de paroi de séparation (400) a un pas dans une plage de 100 μm à 1000 μm.

5. Dispositif de modulation de lumière selon l'une quelconque des revendications 1 à 4, dans lequel la couche de cristaux liquides (300) a une épaisseur dans une plage de 0,1 μm à 50 μm.

6. Dispositif de modulation de lumière selon l'une quelconque des revendications 1 à 5, dans lequel un rapport du pas de l'élément d'espacement de paroi de séparation (400) et de l'épaisseur de la couche de cristaux liquides (300) est dans une plage de 10 à 100.

7. Dispositif de modulation de lumière selon l'une quelconque des revendications 1 à 6, dans lequel un rapport du pas de l'élément d'espacement de paroi de séparation (400) et du pas de la couche de cristaux liquides (300) est dans une plage de 50 à 500.

8. Dispositif de modulation de lumière selon l'une quelconque des revendications 1 à 7, dans lequel la couche de cristaux liquides (300) comprend un composé de cristaux liquides et un dopant chiral.

9. Dispositif de modulation de lumière selon la revendication 8, dans lequel la couche de cristaux liquides (300) comprend en outre un colorant dichroïque.

10. Dispositif de modulation de lumière selon l'une quelconque des revendications 1 à 9, dans lequel un film d'alignement de cristaux liquides (203) est formé sur la première surface du deuxième substrat (201).

11. Dispositif de modulation de lumière selon la revendication 10, dans lequel le film d'alignement de cristaux liquides (203) est un film d'alignement vertical ou un film d'alignement horizontal.

12. Dispositif de modulation de lumière selon l'une quelconque des revendications 1 à 9, dans lequel un film d'alignement de cristaux liquides n'est pas formé sur le deuxième substrat (201).

13. Dispositif de modulation de lumière selon l'une quelconque des revendications 1 à 12, dans lequel la couche de cristaux liquides (300) est configurée dans l'orientation en torsion lorsqu'aucune tension n'est appliquée.

14. Dispositif de modulation de lumière selon l'une quelconque des revendications 1 à 12, dans lequel le dispositif de modulation de lumière présente une transmittance minimum lorsqu'aucune tension n'est appliquée.

15. Fenêtre, comprenant :
le dispositif de modulation de lumière selon l'une quelconque des revendications 1 à 14.

[Figure 1]

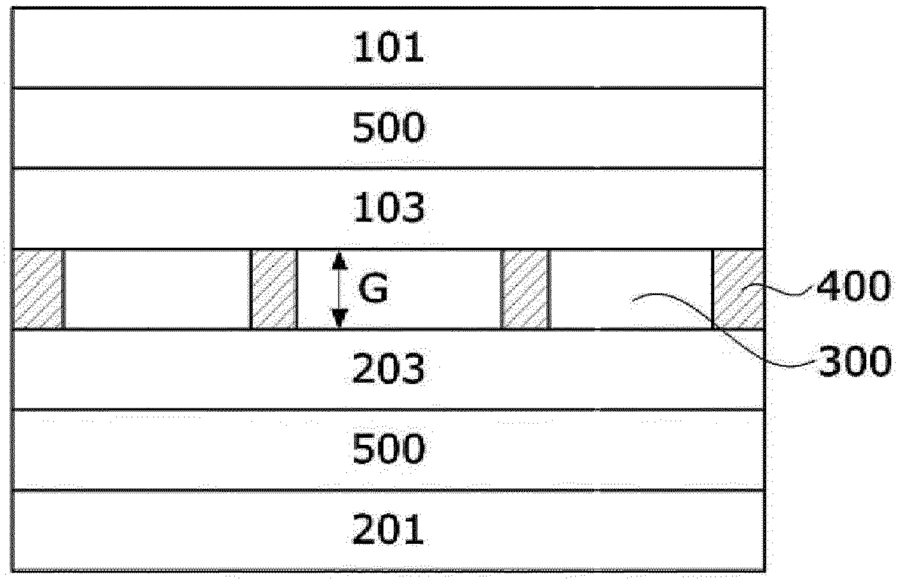

[Figure 2]

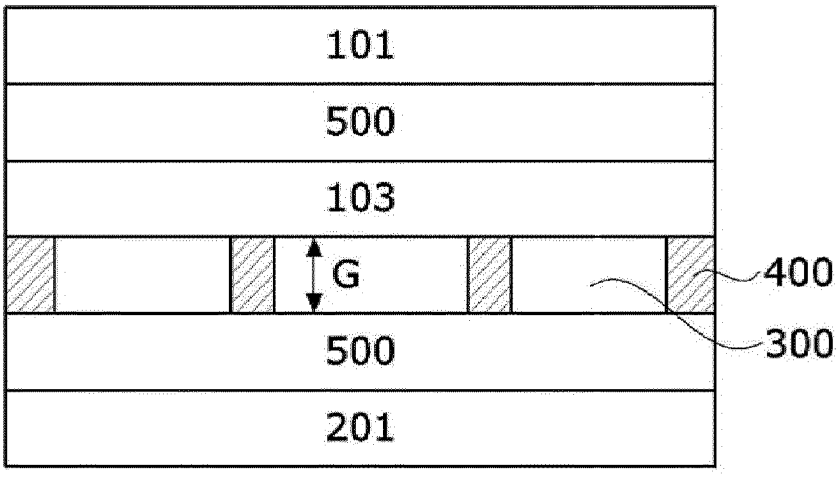

[Figure 3]

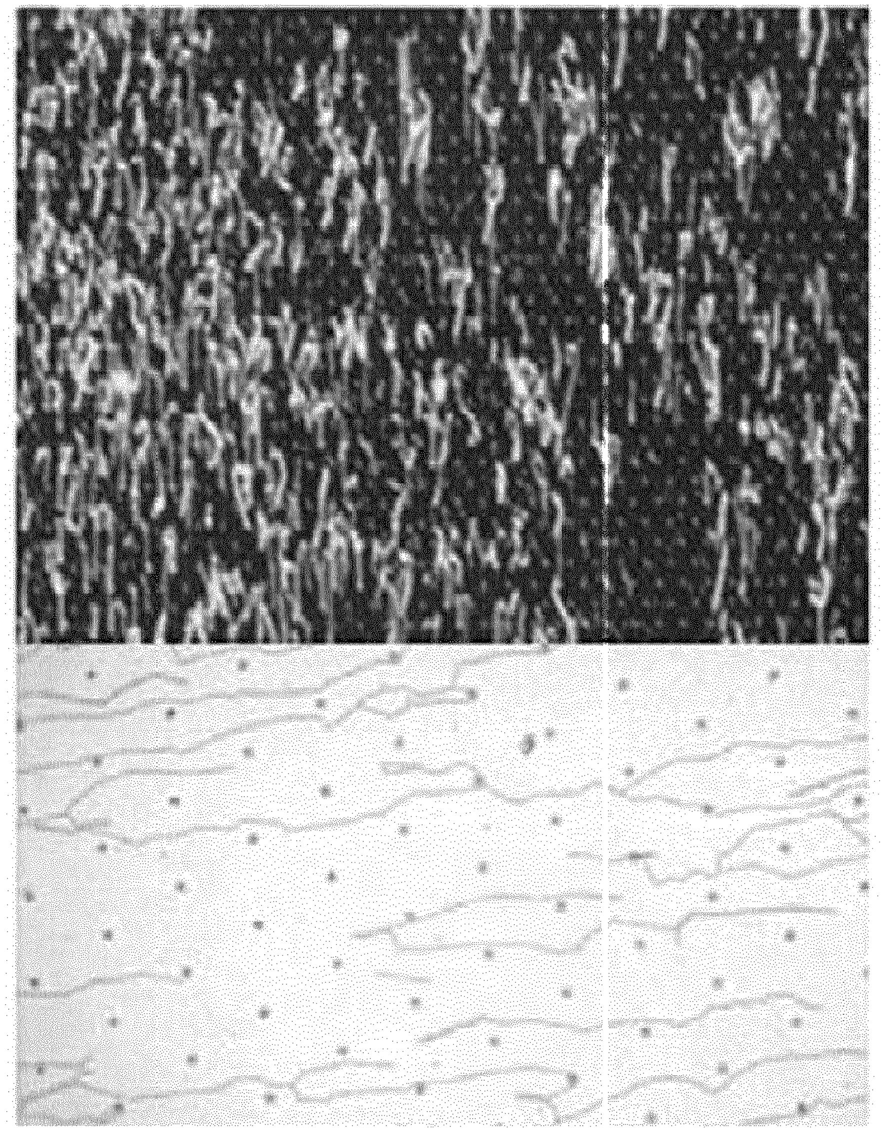

[Figure 4]

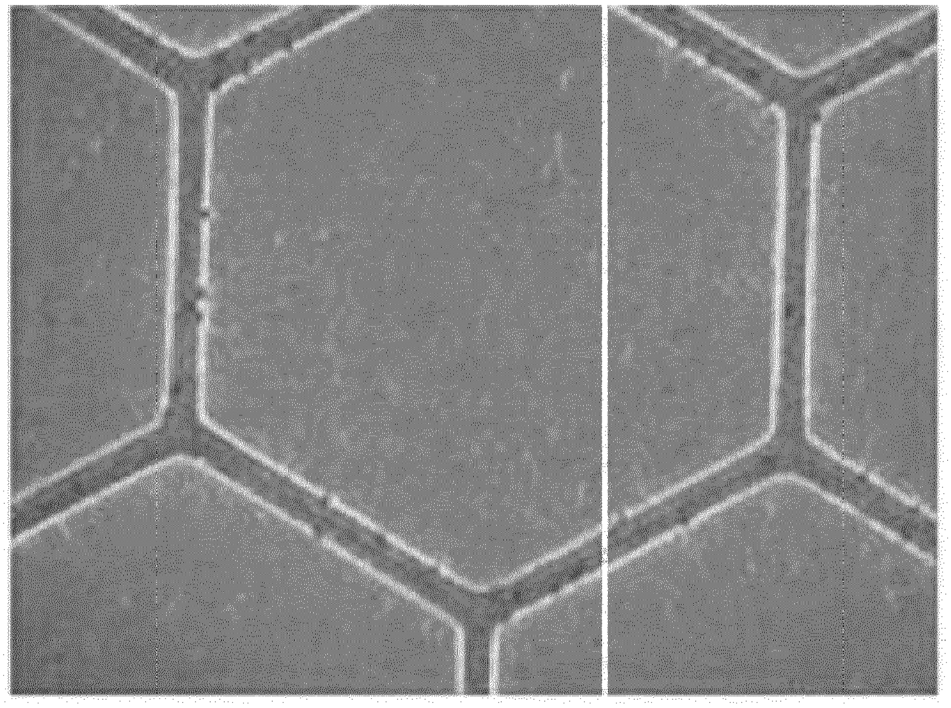

[Figure 5]

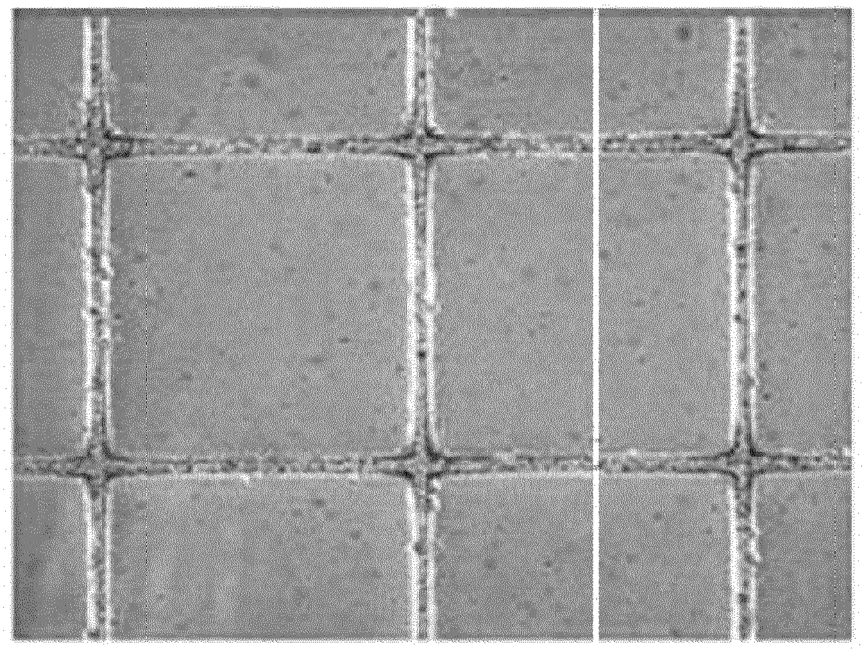

[Figure 6]

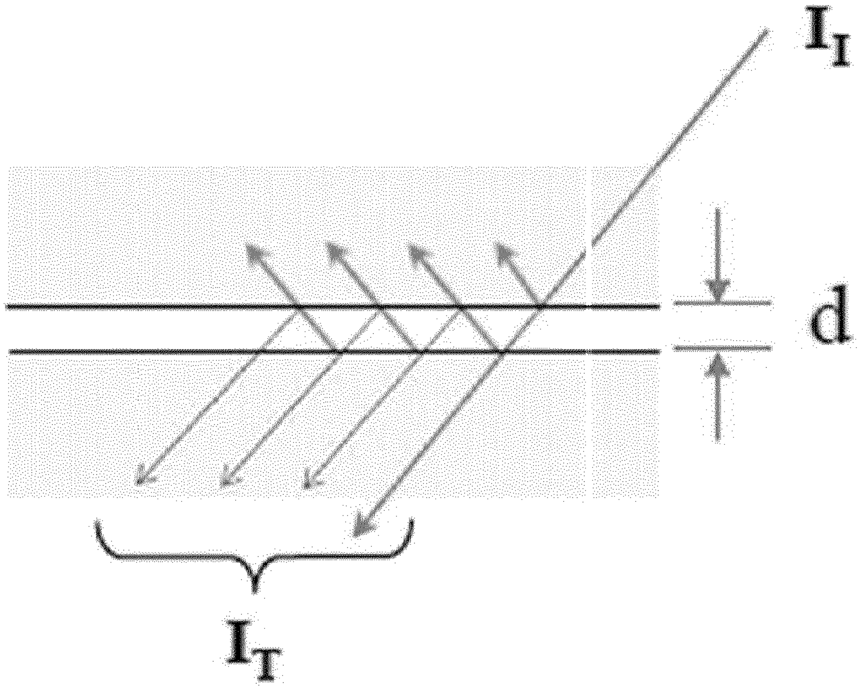

[Figure 7]

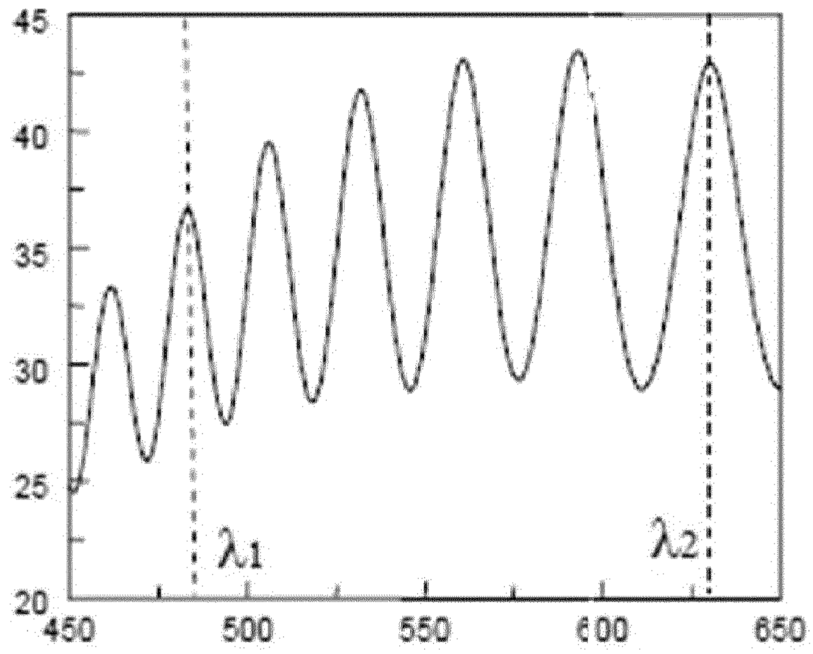

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016026026 A1
- EP 2998786 A1
- KR 101999963 B1


### Non-patent literature cited in the description


- **D. PODOLSKYY et al.** Simple method for accurate measurements of the cholesteric pitch using a ''stripe-wedge Grandjean-Cano cell. *Liquid Crystals*, July 2008, vol. 35 (7), 789-791
- **D. PODOLSKYY et al.** Simple method for accurate measurements of the cholesteric pitch using a stripe-wedge Grandjean-Cano cell. *Liquid Crystals*, July 2008, vol. 35 (7), 789-791